Europäisches Patentamt

European Patent Office

Office européen des brevets

(19)

(11) Publication number: **0 109 951**
**B1**

(12) **EUROPEAN PATENT SPECIFICATION**

(45) Date of publication of patent specification: **15.04.87**

(51) Int. Cl.⁴: **A 01 G 9/22**

(21) Application number: **83850300.1**

(22) Date of filing: **09.11.83**

(86) **Consolidated with 83903618.3/0141816 (European application No./publication No.) by decision dated 19.11.85.**

(54) **A green-house curtain.**

(30) Priority: **10.11.82 SE 8206399**

(43) Date of publication of application:
**30.05.84 Bulletin 84/22**

(45) Publication of the grant of the patent:
**15.04.87 Bulletin 87/16**

(84) Designated Contracting States:
**AT BE CH DE FR GB IT LI LU NL SE**

(56) References cited:
**CH-A- 283 668**
**DE-A-3 025 781**
**FR-A-2 071 064**
**FR-A-2 134 844**

(73) Proprietor: **Ludvig Svensson International B.V.**
**Langeweg 1**
**NL-3214 LJ Zuidland (NL)**

(72) Inventor: **Henningsson, Göran**
**Enebergsvägen 18**
**S-511 00 Kinna (SE)**

(74) Representative: **Roth, Ernst Adolf Michael et al**
**GÖTEBORGS PATENTBYRÅ AB Box 5005**
**S-402 21 Göteborg (SE)**

Courier Press, Leamington Spa, England.

## Description

Technical field

The present invention refers to a curtain for a green-house which comprises a plurality of flexible strips extending in one direction only, that is the longitudinal direction of the fabric and which strips by means of textile threads in a yarn frame work are connected to each other said strips at least partly consisting of materials providing desired heat and light reflection, transmission and absorption properties for a green-house curtain.

Background of the invention

Curtains have been used as shading means in green-houses successfully a number a years. Green-house curtains, also called shading webs, have replaced the previous common lime painting of the glass surface of the green-house, but have also provided other advantages. Thus the adverse effects of the drop of temperature which occur when the ventilator doors are opened is eliminated and a continuous ventilation and heat distribution can be obtained. Besides, the shading fabric stops the sunshine which is let in through the open ventilator doors. As a result of this the supplying of nutritive liquid to the plants under cultivation can be kept more and more at a lower level, at the same time as the difficult and risky job of lime painting of the glass surfaces and the subsequent removal of the paint can be completely eliminated. It is also important that the green-house curtain is easily movable, i.e. that it can be rolled up or drawn sideways, so that in a simple way it can be pulled across or aside for regulating the inlet of light. When it is rolled up or drawn sideways it should not require an undue amount of space.

The high costs for heating green-houses have enforced demands for a better heat insulation, and the wall linings with different type of foils alone or together with ceiling covering of a shading web, which have been used up to now, have resulted in quite modest savings. This mainly depends on the fact that the insulating efficiency of these materials is poor.

Insulation is required in different situations
a) against strong sunlight radiation (field of wavelengths 300—2.800),
b) for windy, cloudy and cold days to get a "positive energy balance", i.e. when the losses of heat are much higher than the incident radiation,
c) against convection losses at night,
d) against heat losses by radiation at night,
e) against ventilating losses at night,
f) against condensation losses at night,
g) combination of the above, which almost always is desired.
Conventional textile materials have proved to be incapable to cope with the above demands.

It is necessary on one hand to use materials which are selectively transparent and/or reflective for visable sun light and on the other hand are highly reflective or have low emission for long wave heat radiation. The combination of these qualities is not to be found in textile materials, but in foils or non-textile sheet materials, a preferred example of which is metalized polythene.

Such materials are however not wholly suitable for the purpose since they are impermeable, gather water pockets, fracture, decay under exposure to sun light and are too stiff for being draped as a curtain, which is the established way to use the fabric in a green-house. Drops of condensation form on the inside, which is most undesirable.

The DE—A—2836375 describes a crocheted fabric consisting of a net like yarn structure, in the open net loops of which are laid strips of a flexible material, for example plastic film strips. The purpose of this technique is to achieve a greater richness of variation as regards the pattern of the fabric. Thus it is possible to use plastic sheets with imprinted patterns which before the introduction into the crocheted goods are cut into strips, so that the completed goods shows the same pattern as the film path, but is made to look open-worked by the textile threads. Such a crocheted article is designed for decoration purposes, such as for curtains the main purposes of which is to be decorative, but can not be used as green-house curtains, since the film strips are arranged with relatively large spaces therebetween and therefore would allow conventional air streams, radiation and condensing water to pass through the fabric. Furthermore the connection between the film strips and the textile connecting threads is not such that the relatively smooth strips are fixed against displacement.

Through the Swedish patent publication No. 8001544-9 (see also EP—A—0029173) it is known to design a green-house curtain as an insulating fabric, in which a heat radiation reflective material have been placed between the double parallel textile paths strips. This double insulating fabric has certainly a very good insulating effect and reflecting efficiency, but as it requires double textile paths, which through a special arrangement are connected with each other, the manufacturing price becomes relatively high at the same time as the double paths at the rolling, draping or bringing together sideways requires a relatively large space.

It is also known through the Swiss patent 138000 to use metal foil strips for textile purposes, said strips being used in order to bring about effects of applied industrial art, such as through using the strips in twisted form or through wrapping them up about a yarn.

The Swiss patent 283.668 discloses a sun protective device, which is not intended or adapted to be used as a green-house curtain which comprises a woven fabric in which the warp consists of strips of a material having a metallized surface on a carrier layer (e.g. a web) and the weft consists of textile threads or vice versa. It would not be possible to fix foil or film strips in such a yarn structure with only transversal connection threads.

In the DE—A—3,025,781 is described a woven structure having a multifilament yarn in the weft in the form of a ribbon and the warp threads being in pairs with laid-in yarn associated with each pair. It would not be possible to fix foil or film strips in such a yarn structure and besides the strips could not be brought really close to each other. The material is stated to be for decorative purposes, but would be totally unsuitable as a green-house curtain.

The purpose of the invention and its most important characteristics

The purpose of the present invention is to provide a green-house curtain of the kind stated in the preamble of claim 1 and which fulfils the following requirements.

a) it should be capable of being drawn sideways and rolled in both directions of the material (lengthwise and across the width).

b) it should be substantially impermeable against thermal air flows, but water-transmitting, so that no water puddles accumulate if the green-house curtain is arranged horizontally.

c) it should be capable of being manufactured in large widths, for example 6 meters, without seams.

d) it should release a certain amount of water vapour.

e) it should be durable against mechanical damage as well as UV-decomposition.

f) it should be capable of being manufactured in several alternative designs, such as high reflective, low emitting transparent or semitransparent for certain radiation (through for example metalizing).

g) it should be feasible to be made two-sided, i.e. having a textile property on one side, for example the under side, and a non-textile property on the other side, the upper side, so that the underside can bind the condensing water and the upper side can reflect solar radiation.

h) the strips should be bound together and safely fixed in a stable yarn framework.

The invention is defined by the appended claims to which reference should now be made.

Description of the drawings

The invention will be described in the following referring to the enclosed drawings showing some embodiments.

Fig. 1 shows on an enlarged scale the mesh pattern of a warp-knitted fabric according to the invention, in which for the sake of clarity the space between the strips are exaggerated strongly.

Fig. 2 shows on an enlarged scale and schematically a cross-section through a fabric according to the invention.

Fig. 3 shows on an enlarged scale a fabric according to the invention manufactured by a weaving procedure.

Description of the embodiments

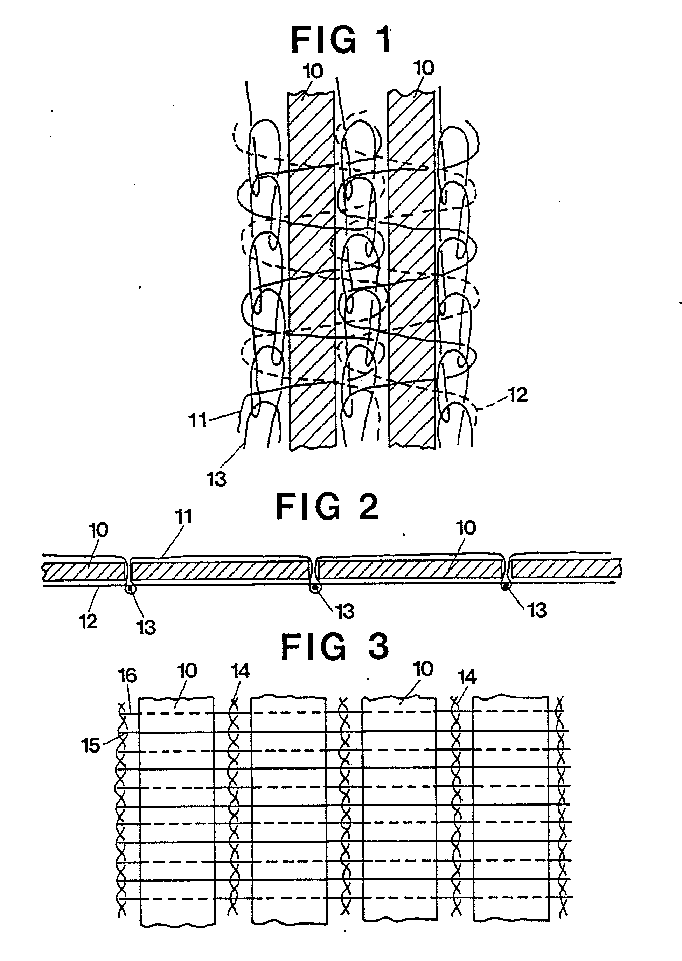

The fabric according to the invention consists of a number of narrow strips 10, which are held together by textile threads. The strips are arranged closely edge to edge, so that they form an essentially continuous surface. In the embodiment shown in figs. 1 and 2 the strips 10 are connected to each other by a knitting procedure. Fig. 1 shows the mesh pattern for a fabric manufactured through warp knitting at which four guide bars are used, one for the strips 10, two for connection threads 11, 12 extending transversly to these and the fourth for the longitudinal connection threads 13.

The space between the strips 10 have been exaggerated strongly in order to make the mesh pattern clear. In reality the above mentioned strips 10 are located closely edge to edge. The longitudinal connection threads 13 are arranged on one side of the fabric, the under side, while the transverse threads 11, 12 are located on both sides of the fabric, the upper and the under side. The connection between the longitudinal and the transverse threads are made on the under side of the fabric, as it appears from Fig. 2. The strips can by that be put tightly edge to edge without the longitudinal threads being in the way, and the unbroken continuous surface on the upper side of the fabric becomes as large as possible.

As is clearly seen in Fig. 1, the longitudinal threads 13 extend continuously in unbroken fashion along opposed edges of adjacent strips, in a series of knitted stitches. The man in the art will recognize these to be in an open pillar stitch formation. It is seen because of the interlocking of these stitches, at every point along the edge of the strips 10 there are several, i.e. three, passes of thread 13.

The transverse threads 11, 12, as is also clearly seen from the Figures, pass above and below the strips at the same place, i.e. opposed to each other, to fixedly trap the strips. Each knitted stitch in the longitudinal threads 13 has two such transverse threads engaging with it. However, it will be noted that no mention is made of the transverse threads 11, 12 bonding to the strips, and Figure 2 shows them thus away from the sides of the strips.

Fig. 3 shows a woven fabric, where the strips 10 make the warp reinforced with an extra textile warp thread 14 under the strips. The weft is made by textile threads 15, 16, which preferably run in loops. Here, also for the sake of clarity the space between the strips 10 has been strongly exaggerated. The weft thread 15 extending on the upper side of the fabric can be thinner than those on the under side and made of a transparent material.

The strips 10 can be of different materials in order to give them desirable properties. By using a sunlight transparent film, which is not transparent for heat radiation, it is possible to obtain a light shading against sunlight. Besides it is achieved an extra insulation during cold, cloudy, windy days without loosing light. A heat insulation at night is also obtained.

With strips which are only partly transparent to sunlight, such as metalized plastic strips and for this reason reflective resp. low emitting against heat radiation a greater shading effect is obtained compared with the above.

Such a fabric can be suitable in hot countries to keep the heat outside the house effectively, or in other situations, where a very good heat insulation is desired.

A material which is low emitting for all radiation can be used for heat insulation at night and for darkening at day.

One side of the strips (the under side) can be provided with a black layer absorbing heat radiation, while the upper side is metalized and thereby highly reflective.

To keep the fabric free from condensing drops on the underside this must on the first hand be kept warm. This is possible by making the upper side low-emitting and the underside absorbing. If condense would occur the drops are absorbed by the connection threads through capillary action before the drops become so large that they will fall down on the plants. By arranging the threads closely on the underside and with extra thickness, this side can be compared with a textile material and can bind relatively large amounts of water by capillary action. In this way condensing drops and a wet upper side are avoided, which if it becomes wet no longer is low emitting.

The advantages with such a fabric consisting of narrow foil or film strips compared to a continuous foil are many: (i) it is more pliable and can be drawn sideways and rolled up, (ii) it is not water-, or diffusion tight and can therefore not collect water vapour, (iii) it can be made very durable and it can be given a textile property on one side. That is to say it can have a textile property on one side, for example the underside, and a non-textile property on the other side so that the underside can bind condensed water and the upper side can reflect solar radiation.

After the fabric is manufactured it is preferably submitted to thermo-setting, at which it is passed through a heat zone of about 150°C under tension. The connection threads are preferably made of a heat-shrinkable material and the heat-shrinking of the connection threads strengthens the fixation of the strips and bring them closer together.

The invention is of course not limited to the embodiments shown but can be modified within the scope of the claims.

**Claims**

1. Curtain, especially a green-house curtain which comprises a plurality of flexible strips (10) extending in one direction only, that is the longitudinal direction of the fabric and which by means of textile threads in a yarn framework are connected to each other, said strips being selected from materials providing the desired heat and light reflection, transmission and absorption properties for a green-house, curtain, characterized in that the yarn framework consists of transverse and longitudinal connection threads (11—13; 14—16) forming a connected framework, that the longitudinal connection threads (13; 14) are located substantially on only one of the sides of the strips, preferably the underside, near the interval between adjacent strips (10), that the transverse connection threads (11, 12; 15, 16) are located on the upper and on the under side of the fabric engaging the longitudinal threads (13; 14), that the width of the strips (10) corresponds to the interval space between the longitudinal connection threads with only the transverse connection threads therebetween, and that the connection threads consist of a material which is capable of absorbing water by capillary action.

2. A green-house curtain according to claim 1, characterized in that the connection threads consists of a material which is heat-shrunk, so that the strips are thermomechanically fixed to the yarn framework formed by the connection threads.

3. A green-house curtain according to claim 1 or 2, characterized in, that the connection threads on one side of the fabric preferably the upper side are thinner than on the other side.

4. A green-house curtain according to claim 3, characterized in, that the thinner threads on the upper side of the fabric are prepared of a transparent material.

5. A green-house curtain according to any of the preceding claims, characterized in, that the strips on one surface are metalized and low heat-emitting and on the other surface are heat-absorbing.

6. A green-house curtain according to claims 1—4, characterized in, that the strips consists of a material which completely or partly transmits visible light.

7. A green-house curtain according to any of the preceding claims, characterized in, that the connection threads on one side of the fabric, preferably the under side, are arranged closer and/or are thicker than on the opposite side.

8. A green-house curtain according to any of the preceding claims, characterized in, that it consists of a warp-knitted fabric, in which the strips (10) make the warp.

9. A green-house curtain according to any of the preceding claims, characterized in, that it consists of a woven fabric, in which the strips (10) make the warp and the transverse connection threads (15, 16) make the weft and in which reinforcing warp threads (14) making said longitudinal connection threads are arranged on the underside of the fabric.

**Patentansprüche**

1. Gardine, insbesondere Gewächshausgardine, die eine Vielzahl von sich nur in einer Rich tung, d.h. der Längsrichtung des Textilgebildes, erstreckenden flexiblen Streifen (10) aufweist, die mittels textiler Fäden in einem Garn-Netzwerk miteinander verbunden sind, wobei die Streifen aus Materialien ausgewählt sind, welche die für eine Gewächshausgardine erwünschten Eigenschaften betreffend Reflexion, Durchlässigkeit und Absorption von Wärme und Licht ergeben, dadurch gekennzeichnet, dass das Garn-Netzwerk aus quer- und längs-verlaufenden Verbindungsfäden (11 bis 13; 14 bis 16) besteht, die ein Verbund-Netzwerk bilden, dass die längs-verlaufenden Verbindungsfäden (13; 14) hauptsächlich nur auf einer Seite der Streifen, vorzugsweise der Unterseite, nahe dem Zwischenraum zwischen nebeneinander liegenden Streifen (10) angeordnet sind, dass die querverlaufenden Verbindungsfäden (11, 12, 15, 16) an der Oberseite und der Unterseite des Textilgebildes angeordnet sind und in die längs-verlaufenden Fäden (13; 14) eingreifen, dass die Breite der Streifen (10) dem Zwischenraum zwischen den längs-verlaufen-den Verbindungsfäden entspricht, wobei nur die quer-verlaufenden Verbindungsfäden dazwischen liegen, und dass die Verbindungsfäden aus einem Material bestehen, das zur Absorption von Wasser durch Kapillarwirkung in der Lage ist.

2. Gewächshausgardine nach Anspruch 1, dadurch gekennzeichnet, dass die Verbindungsfäden aus einem Material bestehen, das unter Wärmeeinfluss geschrumpft ist, so dass die Streifen thermomechanisch an dem durch die Verbindungsfäden gebildeten Garn-Netzwerk fixiert sind.

3. Gewächshausgardine nach Anspruch 1 oder 2, dadurch gekennzeichnet, dass die Verbindungsfäden auf einer Seite des Textilgebildesvorzugsweise der Oberseite—dünner als auf der anderen Seite davon sind.

4. Gewächshausgardine nach Anspruch 3, dadurch gekennzeichnet, dass die dünneren Fäden auf der Oberseite des Textilgebildes aus einem transparenten Material hergestellt sind.

5. Gewächshausgardine nach einem oder mehreren der vorhergehenden Ansprüche, dadurch gekennzeichnet, dass die Streifen auf einer Oberfläche metallisiert sind und die niedrige Wärmeabstrahlung aufweisen und auf der anderen Oberfläche wärmeabsorbierend sind.

6. Gewachshausgardine nach den Ansprüchen 1 bis 4, dadurch gekennzeichnet, dass die Streifen aus einem Material bestehen, das vollständig oder teilweise sichtbares Licht durchlässt.

7. Gewächshausgardine nach einem oder mehreren der vorhergehenden Ansprüche, dadurch gekennzeichnet, dass die Verbindungsfäden auf einer Seite des Textilgebildes, vorzugsweise auf der Unterseite, näher aneinander angeordnet und/oder dicker als auf der gegenüberliegenden Seite sind.

8. Gewächshausgardine nach einem oder mehreren der vorhergehenden Ansprüche, dadurch gekennzeichnet, dass sie aus einem kettengewirkten Textilgebilde besteht, in welchem die Streifen (10) die Kettfäden bilden.

9. Gewächshausgardine nach einem oder mehreren der vorhergehenden Ansprüche, dadurch gekennzeichnet, dass sie aus einem Textilgewebe besteht, in welchem die Streifen (10) die Kettfäden und die quer-verlaufenden Verbindungsfäden (15, 16) die Schussfäden bilden von Verstärkungs-Kettfäden (14), die die genannten längs-verlaufenden Verbindungsfäden bilden, auf der Unterseite des Textilgewebes angeordnet sind.

**Revendications**

1. Un rideau, en particulier un rideau pour serre, qui comprend une pluralité de bandes flexible (10) s'étendant dans une seule direction à sevoir la direction longitudionale du tissu et qui, par l'intermédiaire de fils textiles, dans un canevas, sont reliées les unes aux autres, lesdites bandes étant choisies à partir de matériaux assurant les propriétés de réflexion, transmission et absorption de la chaleur et de la lumière souhaitées pour un rideau de serre, caractérisé en ce que la structure du canevas comprend des fils de liaison transversaux et longitudinaux (11—13; 14—16) formant une structure combinée, les fils de liaison longitudinaux (13, 14) sont disposés essentiellement sur un seul des côtés des bandes, de préférence le côté inférieur, à proximité de l'intervalle ménagé entre les bandes adjacentes (10), les fils de liaison transversaux (11, 12, 15, 16) sont logés sur la face supérieure et sur la face inférieure du tissu en étant reliés aux fils longitudinaux (13; 14), la largeur des bandes (10) correspond à l'intervalle ménagé entre les fils de liaison longitudinaux avec seulement les fils de liaison transversaux entre aux et que les fils de liaison consistent en un matériau qui est susceptible d'absorber l'eau par capillarité.

2. Un rideau pour serre selon la revendication 1, caractérisé en ce que les fils de liaison sont constitués en un matériau qui est rétréci à chaud, de telle sorte que les bandes sont fixées de facon thermomécanique à la structure du canevas formée par les fils de liaison.

3. Un rideau pour serre selon l'une quelconque des revendications 1 et 2, caractérisé en ce que les fils de liaison sur l'une des faces du tissu—de préférence la face supérieure, sont plus minces que sur l'autre face.

4. Un rideau de serre selon la revendication 3, caractérisé en ce que
les fils les plus minces sur la face supérieure de tissue sont préparés à partir d'une matière transparente.

5. Un rideau de serre selon l'une quelconque des revendications précédentes, caractérisé en ce que
les bandes sur l'une des surfaces sont métallisées et émettent une faible chaleur et sur l'autre surface sont absorbantes de la chaleur.

6. Un rideau pour serre selon l'une des revendications 1 à 4, caractérisé en ce que
les bandes sont constituées d'un matériau qui transmet complètement ou partiellement la lumière du jour.

7. Un rideau pour serre selon l'une quelconque des revendications précédentes, caractérisé en ce que
les fils de liaison sur l'une des faces du tissu, de préférence la face inférieure, sont resserrés et/ou sont plus épais qui sur la face opposée.

8. Un rideau pour serre selon l'une quelconque des revendications précédentes, caractérisé en ce qu'

il est constitué à partir d'un tissu à chaîne, dans lequel les bandes (10) forment la chaîne.

9. Un rideau pour serre selon l'une quelconque des revendications précédentes, caractérisé en ce qu' il est constitué en un tissu filé dans lequel les bandes (10) forment la chaîne et les fils de liaison transversaux (15, 16) forment la trame et dans lequel les fils de chaîne de renforcement (14) constituant lesdits fils de liaison longitudinaux sont disposés sur la face inférieure du tissu.

# FIG 1

# FIG 2

# FIG 3